# EUROPEAN PATENT APPLICATION

(11) **EP 4 112 136 A1**
(43) Date of publication of application: **04.01.2023**
(21) Application number: 21182897.5
(22) Date of filing: 30.06.2021
(51) Int. Cl.: A63B 43/00, A63F 13/211, A63F 13/24, G06F 3/0346, A63B 37/04, A63B 37/10

(54) **BALL AND BALL GAMING SYSTEM**

(71) Applicant: Playfinity AS, 0283 Oslo (NO)
(72) Inventor: Solberg, Eivind, 1389 Heggedal (NO); Smith Meyer, Paal, 1392 Vettre (NO); Vælitalo, Stian, 3470 Slemmestad (NO); Nordby-Bøe, Jarle, 1344 Haslum (NO)
(74) Representative: Sattler de Sousa e Brito, Clara

(57) **Abstract**

A ball (12), in particular a baseball or a softball, comprises a main part (22) having a spherical outer surface (23), and a receiving recess (24) with a recess opening (25) which opens through the spherical outer surface (23) and with a recess bottom (34) opposing the recess opening (25). The receiving recess (24) is configured to receive a removable sensing device (18), wherein the removable sensing device (18) comprises a gyroscopic and/or accelerometric sensor (20). Fora better structural robustness the ball (12) comprises a cover part (26), which cover part (26) closes the recess opening (25) and fixes the removable sensing device (18) in between the cover part (26) and the recess bottom (34) when inserted into the receiving recess (24).

## Description

### BACKGROUND OF THE INVENTION

### Field of the Invention

The present invention concerns a ball and a ball gaming system comprising a sensing device with a gyroscopic and/or accelerometric sensor to track movements of the ball.

### Description of the Prior Art

There already exist a number of approaches to track players and/or balls of ball games with the help of position sensors and gyroscopic and/or accelerometric sensors in order to measure and quantify a variety of game play data. For example, one may use a wrist band fitness tracker to measure the number of steps or the acceleration and speed of soccer players during training hours. Even, a lot of professional major league competitors have integrated such technological tracking systems in their standard training approaches to monitor, analyze and evaluate the fitness and performance of individual players.

However, such professional systems often include position tracking which relies on stationary beacons or the like to generate a coordinate system for tracking the position of a sensing device. Such professional tracking systems for ball games are therefore rather expensive.

From WO 2018/206804 A1 a less expensive tracking system for a ball game is known which is directed to occasional players. The main purpose of such a system is to increase fun when playing a ball game, namely by introducing immediate feedback to the player based on the tracking data.

The main component of the ball gaming system presented in WO 2018/206804 A1 is a self-contained sensing device comprising a gyroscopic and/or accelerometric sensor which can be placed inside a ball using a drawer-like support structure. The drawer-like support structure is then placed in a receiving recess of the ball and the sensing device can be connected with a computing device like a smartphone via a wireless connection like Bluetooth. With respect to any technical features of the sensing device the disclosure of WO 2018/206804 A1 is hereby incorporated by reference.

A gaming control software installed and executed on the smartphone is then able to track e. g. the acceleration and speed of the ball. If such a ball is thrown, the player can for example check the maximum speed of its throw on the smartphone.

However, the mechanism with the drawer-like support structure has some disadvantages. For example the weight distribution within the ball can be problematic. Furthermore, a more robust design would be advantageous.

### SUMMARY OF THE INVENTION

Therefore, it is an object of the present invention to provide a ball which is improved over already known trackable balls, in particular with respect to the mounting removable sensing device. Another object is to provide a corresponding ball gaming system.

This object of the invention is achieved by a ball, in particular any ball with a hard surface, like e.g. a baseball, a softball or a cricket ball, comprising:
a) a main part having a spherical outer surface,
b) a receiving recess which opens through the spherical outer surface and a recess bottom opposing the recess opening,
   wherein
c) the receiving recess is configured to receive a removable sensing device, wherein the removable sensing device comprises a gyroscopic and/or accelerometric sensor.
   According to the invention
d) the ball comprises a cover part, which cover part closes the recess opening and fixes the removable sensing device in between the cover part and the recess bottom when inserted into the receiving recess.

The inventors have realized that by fixing the removable sensing device between the cover part and the recess bottom of the receiving recess in the main part of the ball, one is able to provide a better weight distribution for a ball which comprises a sensing device and one is able to provide a better inner structure for the ball.

In this context, fixing can particularly include a pressing contact between the recess bottom and a lay-on surface of the cover part. This ensures that the sensing device has a rather rigid coupling to the ball.

Advantageously, the sensing device has a disc shape with a central rotation axis and the central rotation axis is arranged parallel to or under an angle of less than approximately 10° with respect to an insertion direction along which the cover part slides into the main part.

Although the receiving recess in the main part has a larger cross section compared to the receiving recess for the drawer-like support structure already known from WO 2018/206804 A1, inserting the disk shaped sensing device perpendicular to its lateral extensions into the receiving recess is advantageous. Thereby the sensing device can be arranged in the center of the ball while at the same time there remains enough room above the disc shaped sensing device for providing a sufficiently rigid cover part. This allows to increase the robustness of the ball.

The removable sensing device can be reused from one equipment to another, allowing users to save cost and reducing the environmental impact of electronic and plastic usage. The sensing devices can be configured to support other activities, as other types of balls and tracking users on a trampoline with a foot band accessory.

Advantageously, the main part and the cover part each comprise an inner core part, preferably made of a rigid material, which core parts together form a shock absorbing and/or shock resisting core cage, which surrounds the sensing device.

The core cage provides a structurally rigid assembly which protects the sensing device also in situations of hard play, e. g. when the ball is thrown against a hard object or bumping on the ground.

Advantageously the core cage is surrounded by an outer shell made of an elastic material, preferably PU material.

By providing such an outer shell made of an elastic material one is able to mimic the playing characteristics of a ball normally used for the particular ball game, e. g. a baseball or a softball. In particular, the material of the outer shell of the ball is specifically designed to give the same characteristics as ball normally considered as a good training ball.

Again the outer shell will most probably comprise two parts attached to the core parts of the main part and the cover part. However, one may also think of an outer shell designed as an empty shell into which the core cage with the removable sensing device is inserted e.g. through an opening slit.

Advantageously, the cover part and/or the main part comprises an extruded sealing lip which prevents water from entering into the receiving recess.

By providing an in between the receiving opening of the receiving recess and the cover part the ball can be made waterproof. This is in particular important because the sensing device may be designed with more relaxed restrictions with respect to the waterproof level but still includes batteries and other electronic components. Generally, it would be sufficient to place the sealing lip at the core cage. However, it is advantageous to provide the sealing lip close to the spherical surface.

Advantageously, the main part and/or the cover part comprise weight insertion sections, in particular screw holes, distributed within the main part respectively the cover part, wherein the weight insertion sections are configured to receive adjustments weights, in particular screws, in order to adjust the overall weight of the ball and/or the distribution of weight within the ball.

By providing such weight insertion sections distributed within the ball, in particular in the inner core cage, the user may adjust the weight of the ball according to its needs. In the weight insertion sections little metallic pins could be individually inserted or removed for adjusting the weight distribution. However, for an easy mounting of the adjustment weights one may use screw holes and screws. In particular, the insertion sections may be distributed on a ring or a spherical shape in the main part and/or the cover part. This allows to equalize the distribution of weight within the ball.

The weight insertion sections together with the weights may also be used to compensate for production related variations in the foam density of the outer shell of the ball. In particular, the adjustment weights may be used to easily provide an official weight for the ball e. g. in a final step of the production.

By unequally distributing the adjustment weights in the weight insertion sections the users may move the center of inertia of the ball. By removing adjustment weights the total weight of the ball can be lowered for unskilled players like kids which start to learn the ball game.

The insertion sections can be arranged spaced apart or directly next to each other. In particular, the main part respectively the cover part each can comprise between 6 to 10, in particular 8, insertion sections.

These numbers of insertion sections have been proven to be a good balance between a fine granularity of weight adjustments and usability.

Advantageously, the recess bottom of the receiving recess in the main part or a lay-on surface of the cover part comprises a through hole, in particular in its rotational center, through which a push rod reaches an activation button of the removable sensing device arranged in the receiving recess, wherein the push rod is configured to forward a pressing motion triggered by a user from the spherical outer surface towards the activation button.

In order to save battery, the sensing device enters a sleeping mode after a certain time of inactivity. This can be derived from data measured with the gyroscopic and/or accelerometric sensor. The push rod reaching through the bottom of the receiving recess allows to push an activation button of the sensing device from the outside of ball, in particular from the outside of the inner core cage surrounding the sensing device.

Advantageously, the push rod is made of an elastic material, in particular rubber/TPE. This may prevent damage to the activation button of the sensing device in case of hard impacts on an outer pressing area of the push rod.

Furthermore, the push rod may comprise a structure which allows to bend the push rod sideways if hard force impulses are applied on the pressing area. The elasticity and dimension of the push rod should be structured such that a hard baseball can have a small area that gives sufficient movement for the activation button of the sensing device but still is robust enough for hard impacts.

Advantageously, the main part and/or the cover part comprise an eccentrically placed through hole for a fastening screw, which fastening screw fastens together the main part and the cover part once the cover part is inserted in the receiving recess.

By providing the through hole for the fastening screw eccentrically the gyroscopic and/or accelometric sensor of the sensing device can be placed exactly in the center of the ball. The main part and/or the cover part may provide a place for receiving a square nut within the through hole. In this context, also the sensing device may include a corresponding through hole in order to allow the screw to penetrate the cover part, the sensing device as well as the main part towards the square nut.

Advantageously, the sensing device has a mounting T-groove which allows to mount the sensing device on the cover part by sliding the T-groove over a protruding T-element of the cover part before the cover part is inserted into the receiving recess.

This allows to easily mount a sensing device on the cover part e. g. after charging the battery of the sensing device. The cover part is then inserted together with the sensing device within the receiving recess of the main part and fastened with a screw.

Advantageously, the protruding T-element of the cover part is an elastic rod, e.g. made of rubber orTPE material, fastened to an otherwise rigid core part of the cover part. This allows for a mounting system which can absorb hard impacts without breaking the sensing device, in particular without damaging the T-groove.

Advantageously, the cover part has a lid stop protruding towards the inside of the ball when the cover part is inserted into the receiving recess.

The lid stop may provide a stop for the sliding movement of the sensing device during mounting. Furthermore, the lid stop may counteract a torque force exerted by the user when the eccentrically placed fastening screw is tightened.

With respect to the ball gaming system the object of the present invention is solved by a ball gaming system comprising
a) a ball as discussed above,
b) a removable sensing device inserted in the receiving recess and
c) a gaming control software executed on a computing device, in particular a smartphone, which gaming control software is configured to
   - connect to the sensing device (18) via a wireless connection (18) in order to receive sensor data and to
   - trigger signalization events based on these sensor data.

A sensing device for a ball that interacts with the gaming control software on a computing device, advantageously provides the infrastructure to apply rules for the use of the ball that is controlled by the gaming control software. Thus, elements such as throws, catches, height, time, bounces, misses, distance, altitude (height over sea level), rolling, shakes, button press(es), twists, movement, magnitism and acceleration can all be combined together to make a vast amount of games that are controlled by the gaming control software, and would be very time and resource consuming or simply impossible, to execute with non sensing balls. Combining the factors for two or more balls, exponetially increases the range of combinations to create game play that non sensing balls do not offer.

Advantageously, the gaming control software is configured to
a) connect to a database, in particular through the Internet, in order to store the sensor data and/or derived values, in particular score points, on a per player basis and to retrieve stored sensor data and/or derived values from the player and/or other players, in particular opponents,
b) trigger the signalization events taking into account the sensor data actually received from the sensing device as well as the sensor data and/or derived values retrieved from the database.

Advantageously, the gaming control software allows to asynchronously play against other players by providing challenges and/or leagues of players.

In particular, the invention can be used to create virtual leagues of players based on the data measured in a physical game. This is normally only used in computer games. To increase the rank in the league the players improve their skills and challenges other players.

As a very simple example, the infrastructure provides for a game play for throwing a ball higher and higher. If a throw is not higher than previous throw, the game is ended. The player who reached the most throws before the game ends is the winner. Real time sound feedback from computing software/device would directly provide the users with knowledge of their performance. This game would be very resource craving with a non-sensing ball, but simple to do with one person, as the computing system provides a point counter and a judge.

The above example can be referred to as an analogy to "pong" for computer games, one of the first computer games made. Today we know that this simple game on a computing device, was the start of many possibilities for computer games. Such is the case for the physical sensing device for a ball connected to a computing device with the ability to give real time feedback to the users.

Another example of a game play is that the computing software can organize a game match between a player A in country B to play against a player C in country D in realtime and with minimal effort from the players. Player A can use the gaming control software to invite the player C to play against him in a particular game, for example the game example above "high and higher". The player can challenge player C to try to get more throws then player A before game is ended. Player A can set a time limit for player C to get more throws than player A within a time frame, for example 2 hours. When time limit is over, the computing software on the computing devices for player A and Player C can check the stored data on the database to see who won, and relay this information to both players. The connection of the players can be arbitrary to any player with the same gaming control software, and done immediately when player A sends the invitation to a game. Players at different geolocations around the world are thus connected together in play, and can experience game play together, with minimal effort from both players.

Advantageously, the ball gaming system, comprises a peripheral gaming tool, in particular a baseball glove, which comprises a receiving recess configured to receive the removable sensing device and/or a second removable sensing device having at least the same housing as the removable sensing device.

When mounting a removable sensing device on a glove for catching a ball comprising the sensing device, the possible game play is increased in comparison to only having a ball. In addition to the factors mentioned above for the ball (...), the system will have factors such as; who caught the ball, how was the glove positioned in space when the ball was caught, was the glove (and player) moving before the catch, did the player move with the ball after the catch, how much did the player move, how fast did the player move, did the player jump before the catch and did the player fall to the ground after the catch. All these factors can be combined together to make a vast amount of games that are controlled by the gaming control software. Otherwise such gaming would be very time and resource consuming, or simply impossible, to execute with non-sensing balls. Combining the factors for two or more balls and gloves, exponentially increases the range of combinations to create game play that non-sensing balls together with non-sensing gloves do not offer.

By reusing the simple example above, now with two sensing gloves, the game play of "higher and higher" could involve having the ball be caught in turn by player A and player B. The player that threw the ball that was lower than the previous throw (thus the glove that caugt the ball before the throw) would receive a penalty.

Independent of the ball gaming system of the present invention, the gaming ideas described above with respect to the gaming control software and the database can also be used for other games which do not necessarily include a ball. As such the sensing device may be used with any other gaming tool with a receiving recess in order to provide a system which allows virtual leagues and/or synchronous or asynchronous game play, like e.g. the game mode "higher and higher" for jumping on a trampoline with a wrist or food band comprising the sensing device. The applicant herby explicitly reserves the right to direct future claims, e.g. using divisional applications, towards such general game play options.

### BRIEF DESCRIPTION OF THE DRAWINGS

Various features and advantages of the present invention may be more readily understood with reference to the following detailed description taken in conjunction with the accompanying drawings in which:
- Figure 1: shows an exploded perspective view of a ball gaming system comprising a two-part ball, a sensing device and a smartphone;
- Figure 2: shows a perspective view of a cover part of the ball and the sensing device;
- Figure 3: shows a perspective view of a main part of the ball;
- Figure 4: shows a partially cut perspective view of the main part;
- Figure 5: shows a more detailed view of the cover part;
- Figure 6: shows a partially cut view of the cover part.

### DETAILED DESCRIPTION OF PREFERRED EMBODIMENTS

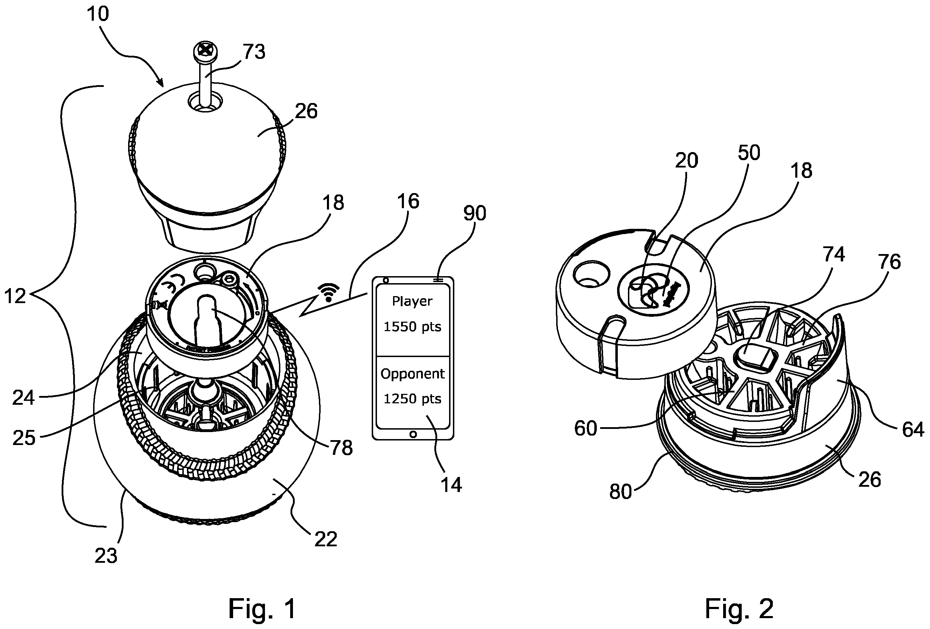

Figure 1 shows a ball gaming system 10 which comprises a ball 12 and a smartphone 14 as a computing device which communicates via a wireless connection 16 (e.g. Bluetooth) with a removable sensing device 18 inserted in the ball 12.

The present embodiment is particularly directed towards a softball ball gaming system 10. However, almost all of the technical teachings presented with respect to a softball can also be used with other types of balls 12, like e.g. a baseball, a golf ball or a squash ball.

The sensing device 18 is a self-contained component having a disc shape which comprises a gyroscopic and/or accelerometric sensor 20 (compare Figure 2) in order to track the movements of any component to which the sensing device 18 is attached. For this purpose the sensing device 18 comprises a battery and electronic circuitry (not shown). In order to give appropriate measured data, the gyroscopic and/or accelerometric sensor 20 is placed in the center of the sensing device 18.

The ball 12 comprises a main part 22 having a spherical outer surface 23 and a receiving recess 24 which opens through the spherical outer surface 23 via a recess opening 25.

The ball 12 further comprises a cover part 26 which fits into the receiving recess 24. As can be seen from Figure 2, the sensing device 18 can be mounted on the cover part 26 and then both components together can be inserted into the receiving recess 24 of the main part 22.

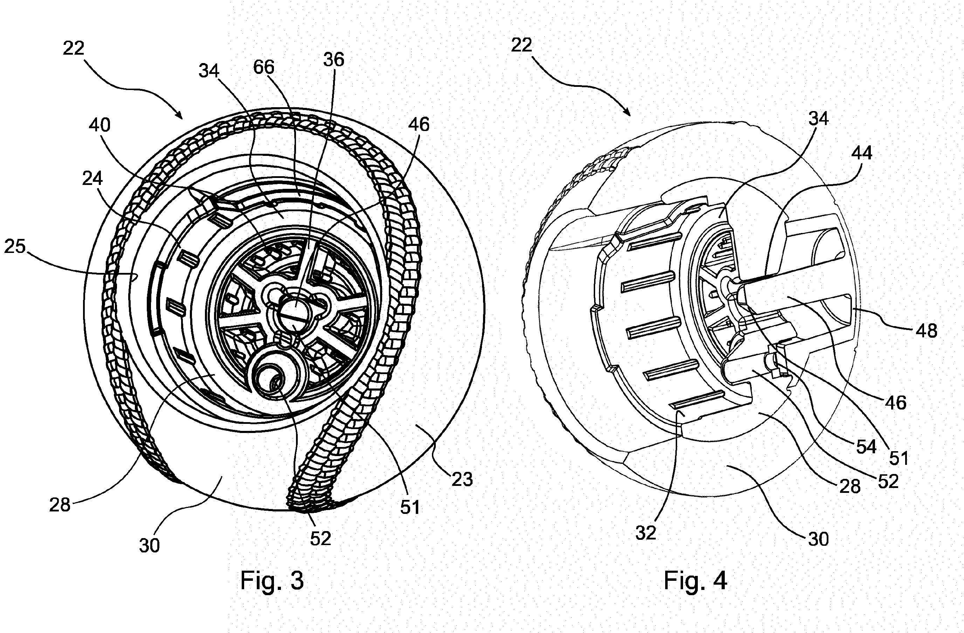

Figures 3 and 4 show the main part 22 of the ball 12 in more detail.

The main part 22 comprises an inner core main part 28 surrounded by an outer shell part 30. The inner core main part 28 is generally shaped as a sphere which is cut out such that a cylindrical recess 32 with a bottom 34 is shaped.

The cylindrical recess 32 has an inner diameter which is about the same as the outer diameter of the disc shaped sensing device 18, in order to be able to insert the sensing device 18 into the cylindrical recess 32 of the inner core main part 28.

The bottom 34 is provided near the center of the sphere such that the sensing device 18 can be positioned with its gyroscopic and accelerometer sensor 20 centered in the sphere.

The inner core main part 28 further comprises inner radial struts 36 in order to provide a rigid structure. In particular, the inner core main part 28 is made of a rigid material.

The outer shell main part 30 is made of a softer material, in particular a material which provides an elasticity which a player would expect from the ball 12, here a softball. On the outside the outer shell main part 30 provides a spherical outer surface 38.

The cylindrical recess 32 of the inner core main part 28 also extends through the outer shell main part 30 such that the receiving recess 24 for the sensing device 18 and the cover part 26 is formed.

The inner core main part 28 further comprises screw holes 40 as weight insertion sections distributed on a ring in between the radial struts 36. These screw holes 40 can be equipped with screws as adjustment weights (not shown) in order to adjust the weight distribution within the ball 12 and its total weight.

As can be seen from Figure 4, the bottom of inner core main part 28 further comprises a through hole 44 through which a push rod 46 reaches from the outside towards the space where the sensing device 18 will be arranged.

This push rod 46 belongs to a push activation structure 48 which is used to trigger an activation button 50 (compare Figure 2) of the sensing device 18. The push activation structure 48 is cup shaped with its bottom pointing radial outwards from the inner core main part 28 and with the push rod 46 being arranged in the inside of the cup thereby pointing to the center of the ball 12. The outer shell main part 30 also surrounds and covers the push activation structure 48 protruding from the inner core main part 28.

The push rod 46 and if necessary other parts of the push activation structure 48 are made of an elastic material, in particular a rubber material. The player of the ball gaming system 10 may press the push activation structure 48 through the outer surface of the ball 12. The push rod 46 then moves towards the center of the ball 12, where it may activate the activation button 50 of the sensing device 18.

However, when hit with a hard hit, the push rod 46 may bend and flex away from its straight movement line in order to avoid an impact which would be too hard for the activation button 50 of the sensing device. For this purpose, the inner end of the push rod 46 has a sloped end face section 51 which facilitates the bending of the push rod 46.

Finally, the inner core main part 28 comprises a through hole 52 for a fastening screw for fastening the cover part 26, wherein the through hole 52 is eccentrically placed perpendicular to the bottom of the cylindrical recess 32. As a counter part for the fastening screw a square nut 54 is placed along the through hole 52.

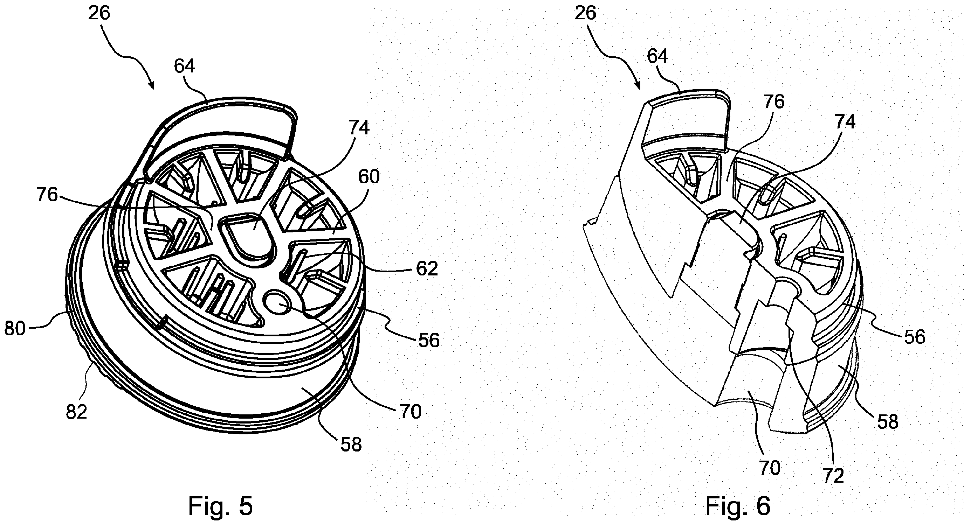

Figures 5 and 6 show the cover part 26 in detail.

Also the cover part 26 comprises an inner core cover part 56 which carries an outer shell cover part 58.

Like the inner core main part 28 the inner core cover part 56 comprises strengthening struts 60 and weight insertion sections 62.

When the cover part 26 is inserted into the receiving recess 24 of the main part 22, the inner core cover part 56 and the inner core main part 28 form an inner core cage which can absorb and/or resist shocks such that the sensing device 18 is protected.

Furthermore, the cover part 26 comprises a lid 64 which protrudes from the cover part 26 towards the inside of the ball 12. This lid 64 acts as a rotational stop which guides the cover part 26 when inserted into the receiving recess 24 of the main part 22 towards a given rotational angle. For this purpose the main part 22 comprises a corresponding counter recess 66 (compare Figure 3).

The cover part 26 also comprises a through hole 70 with a shoulder 72 aligned with the through hole 52 for the fastening screw 73 (compare Figure 1). In this context, the lid 64 and the counter recess 66 also provide a structure countering the torque exerted when the fastening screw 73 is fastened.

Furthermore, the cover part 26 comprises a flat lay-on surface 76 for the sensing device 18. In the center of the lay-on surface 76 a T-element 74 protrudes which can interact with a T-groove 78 provided on the backside of the sensing device 18 (compare Figure 1). In particular, the protruding T-element 74 may be made of an elastic material to compensate for any size tolerances of the involved components.

Finally, the cover part 26 comprises a sealing lip 80 running circumferentially along an outer surface 82 of the outer shell cover part 58. This allows to water tightly close the opening 25 of the receiving recess 24 of the ball 12 when the cover part 26 is inserted.

The ball gaming system 10 works as follows:
Using the T-groove 78 of the sensing device 18, a player can slide the sensing device 18 on the T-element 74 in order to mount the sensing device 18 on the cover part 26. In this context the lid 64 acts as a stop for the sensing device 18.

Then the player inserts the cover part 26 together with the sensing device 18 into the receiving recess 24 of the main part 22 and fastens the fastening screw inside the through holes 52 and 70.

By pressing an activation surface area opposite of the cover part 26 the push rod is moved towards the inside of the ball 12. The push rod 46 then triggers the activation button 50 of the sensing device 18 in order to activate the sensing device 18.

The sensing device 18 is then paired with the smartphone 14 which runs a gaming control software in order to track movements of the ball 12. Via the wireless connection 16 the measured data of the gyroscopic and/or accelerometric sensor of the sensing device 18 can then be transferred to the smartphone 14.

The player may then activate a competition mode in which his skills are asynchronously compared to another player, the opponent. For example the player may choose a mode in which the maximum speed of each throw with the ball 12 gives a certain amount of points and the points are summed up for a given number of throws, e.g. for then throws.

Using the measured data the smartphone 14 may then display summed up points after each throw. At the same time or at any other suitable point in time, the gaming control software can store the measured maximum speed or the derived points for each throw in a database accessible through the Internet.

For the opponent, for whom at some earlier time those measured data had already been stored in the database, the gaming control software may displays the points reached by the opponent after each throw synchronized with each throw of the player. Thereby the player gets an asynchronous signalization whether he or she is better than the opponent with his current throws by checking the points shown on the smartphone 14.

In particular, the smartphone 14 comprises a loudspeaker 90 in order to signalize competitive taunts like: "The opponent leads. Try harder!" or "Perfect throw! You are leading.".

If the player and the opponent are using the ball gaming system 10 at the same time, they can synchronously compare their results via the database.

Because the database is accessible via the Internet, the ball gaming system 10 can link players at different geographic locations together in a common game or player league. For the purpose of a league game play, the gaming control software can choose an opponent according to previously reached points of the player such that players of comparable skills may play against each other.

## Claims

1. A ball (12), in particular a baseball or a softball, comprising
a) a main part (22) having a spherical outer surface (23),
b) a receiving recess (24) with a recess opening (25) which opens through the spherical outer surface (23) and with a recess bottom (34) opposing the recess opening (25),
wherein
c) the receiving recess (24) is configured to receive a removable sensing device (18), wherein the removable sensing device (18) comprises a gyroscopic and/or accelerometric sensor (20),
**characterised in that**
d) the ball (12) comprises a cover part (26), which cover part (26) closes the recess opening (25) and fixes the removable sensing device (18) in between the cover part (26) and the recess bottom (34) when inserted into the receiving recess (24).

2. The ball according to claim 1, wherein the sensing device (18) has a disc shape with a central rotation axis and wherein the central rotation axis is parallel to or has angle of less than 10° with an insertion direction along which the cover part (26) slides into the main part (22).

3. The ball according to any of the preceding claims, wherein the main part (22) and the cover part (26) each comprise an inner core part (28, 56), preferably made of a rigid material, which core parts (28, 56) together form a shock absorbing and/or shock resisting core cage (28, 56), which surrounds the sensing device (18).

4. The ball according to claim 3, wherein the core cage (28, 56) is surrounded by an outer shell (30, 58) made of an elastic material, preferably PU material.

5. The ball according to any of the preceding claims, wherein the main part (22) and/or the cover part (26) comprises an extruded sealing lip (80) which prevents water from entering into the receiving recess (24).

6. The ball according to any of the preceding claims, wherein the main part (22) and/or the cover part (26) comprise weight insertion sections (40, 62), in particular screw holes, distributed within the main part (22) respectively the cover part (26), wherein the weight insertion sections (40, 62) are configured to receive adjustment weights, in particular screws, in order to adjust the overall weight of the ball (12) and/or the distribution of weight within the ball (12).

7. The ball according to any of the preceding claims, wherein the recess bottom (34) of the receiving recess (24) in the main part (22) or a lay-on surface (76) of the cover part (26) comprises a through hole, in particular in its rotational center, through which a push rod (46) reaches an activation button (50) of the removable sensing device (18) arranged in the receiving recess (24), wherein the push rod (46) is configured to forward a pressing motion triggered by a user from the spherical outer surface (23) towards the activation button (50).

8. The ball according to any of the preceding claims, wherein the main part (22) and/or the cover part (26) comprise an eccentrically placed through hole (52) for a fastening screw, which fastening screw fastens together the main part (22) and the cover part (26) once the cover part (26) is inserted in the receiving recess (24).

9. The ball according to any of the preceding claims, wherein the sensing device (18) has a mounting T-groove (78) which allows to mount the sensing device (18) on the cover part (26) by sliding the T-groove (78) over a protruding T-element (74) of the cover part (26) before the cover part (26) is inserted into the receiving recess (24).

10. The ball according to claim 9, wherein the cover part (26) has a lid stop (64) protruding towards the inside of the ball (12) when the cover part (26) is inserted into the receiving recess (24).

11. A ball gaming system (10) comprising
a) a ball (12) according to any of the preceding claims,
b) a removable sensing device (18) inserted in the receiving recess
and
c) a gaming control software executed on a computing device (14), in particular a smartphone, which gaming control software is configured to
- connect to the sensing device (18) via a wireless connection (18) in order to receive sensor data and to
- trigger signalization events based on these sensor data.

12. The ball gaming system according to claim 11, wherein the gaming control software is configured to
a) connect to a database, in particular through the Internet, in order to store the sensor data and/or derived values, in particular score points, on a per player basis and to retrieve stored sensor data and/or derived values from the player and/or other players, in particular opponents,
b) trigger the signalization events taking into account the sensor data actually received from the sensing device as well as the sensor data and/or derived values retrieved from the database.

13. The ball gaming system according to claim 12, wherein the gaming control software allows to asynchronously play against other players by providing challenges and/or leagues of players.

14. The ball gaming system according to any of claims 11 to 13, comprising a peripheral gaming tool, in particular a baseball glove, which comprises a receiving recess configured to receive the removable sensing device (18) and/or a second removable sensing device (18) having at least the same housing as the removable sensing device (18).
